# EUROPEAN PATENT SPECIFICATION

(11) **EP 4 237 886 B1**
(45) Date of publication and mention of the grant of the patent: **23.04.2025**
(21) Application number: 21805659.6
(22) Date of filing: 14.10.2021
(51) Int. Cl.: G02B 5/28, G02B 5/20, C02F 1/32

(54) **ULTRAVIOLET RADIATION FILTER, METHOD FOR MANUFACTURING SAID FILTER, AND ULTRAVIOLET RADIATION GERMICIDAL DEVICE INCLUDING SAID FILTER**
FILTER FÜR ULTRAVIOLETTE STRAHLUNG, VERFAHREN ZUR HERSTELLUNG DIESES FILTERS UND KEIMTÖTENDE VORRICHTUNG FÜR ULTRAVIOLETTE STRAHLUNG MIT DIESEM FILTER
FILTRE DE RAYONNEMENT ULTRAVIOLET, PROCÉDÉ DE FABRICATION DUDIT FILTRE ET DISPOSITIF GERMICIDE DE RAYONNEMENT ULTRAVIOLET COMPRENANT LEDIT FILTRE

(30) Priority: 28.10.2020 IT 202000025579; 26.03.2021 IT 202100007520
(43) Date of publication of application: 06.09.2023
(73) Proprietor: Maifrini, Matteo Maria, 20900 Monza (MB) (IT); Usuelli, Andrea, 23880 Casatenovo (LC) (IT)
(72) Inventor: Maifrini, Matteo Maria, 20900 Monza (MB) (IT); Usuelli, Andrea, 23880 Casatenovo (LC) (IT)
(74) Representative: Benedetto, Marco
(86) International application number: PCT/IT2021/050331
(87) International publication number: WO 2022/091149

(56) References cited:
- EP-A1- 3 150 562
- WO-A1-2009/088984
- WO-A1-2020/070589
- US-A1- 2016 146 993

## Description

### Field of application of the invention

The present invention applies to the field of germicidal devices with ultraviolet radiation irradiation at a wavelength in the UV-C band, i.e., between 100 nanometers and 280 nanometers. Said devices are commonly referred to as "germicidal lamps". Incidentally, ultraviolet radiation has a wavelength between 100 nanometers and 400 nanometers.

The present invention particularly relates to both a germicidal lamp and an ultraviolet radiation filter included in said lamp. The present invention also relates to a method for manufacturing said filter.

### Overview of the prior art

As known, UV-C radiations (i.e., ultraviolet radiations at a wavelength in the UV-C band) have a germicidal effect. In particular, ultraviolet radiations having a length of 222 nanometers, in addition to not significantly damaging the skin of a person exposed thereto, are capable of inactivating particles of influenza virus A subtype H1N1. Since the latter has a genomic size similar to that of the SARS-CoV-2 virus (known as "severe acute respiratory syndrome coronavirus 2"), it is plausible that ultraviolet radiations having a wavelength of 222 nanometers also have a germicidal effect on the SARS-CoV-2 virus. This led to the development of germicidal lamps emitting ultraviolet radiation at a wavelength of 222 nanometers.

Document WO 2020/070589 A1 discloses multilayer optical films and articles comprising the same.

Document WO 2009/088984 A1 discloses optical fibers for use with mercury arc lamp monitoring applications.

Document EP 3 150 562 A1 discloses UV lamp and method for irradiating a surface, a liquid or a gas with UV radiation.

### Objects of the invention

It is the object of the present invention to indicate an ultraviolet radiation filter which is substantially opaque against ultraviolet radiations having a wavelength between 230 nanometers and 340 nanometers, and having maximum transmittance against UV-C radiations the wavelength of which is in a range around 222 nanometers.

It is another object of the present invention to indicate both a method for manufacturing the aforesaid filter and a germicidal device emitting UV-C radiations including said filter.

### Summary and advantages of the invention

The present invention according to claim 1 relates to a germicidal device with ultraviolet radiation irradiation, said device comprising
- ultraviolet radiation emitting means having a wavelength in the UV-C band,
- an ultraviolet radiation filter connected to said emitting means, said ultraviolet radiation filter comprises a plate (i.e., a body having two dimensions, length and width, prevailing over the third dimension, thickness, and with the major faces mutually parallel) including:
   - a substrate (in the meaning of "substratum") which is permeable at least to ultraviolet radiations having a wavelength in the UV-C band (i.e., between 100 nanometers and 280 nanometers) and composed of at least 99.9% by weight of silicon dioxide (i.e., SiO₂, commonly referred to as "quartz"),
      said substrate comprising a first face and a second face opposite to said first face (and preferably parallel to the latter),
      said substrate having a thickness, corresponding to the mutual distance of said first and second faces, between 1 millimeter and 2 millimeters with a dimensional tolerance of ± 0.1 millimeters;
   - a coating comprising a first plurality of layers each of which composed of 100% silicon dioxide, and a second plurality of layers each of which composed of 100% hafnium dioxide (i.e., HfO₂),
      said substrate being covered with said coating at said first face,
      in said coating, said layers of said first plurality (composed of 100% silicon dioxide) being alternated with said layers of said second plurality (composed of 100% hafnium dioxide) away from said substrate so that, with the exception of a first layer of said first or second plurality covering said first face of said substrate and with the exception of a last layer of said first or second plurality further away from said substrate than the other layers of said first and second pluralities (i.e., with the exception of the innermost layer and the outermost layer of said coating), each layer of said first plurality is interposed between two layers of said second plurality and each layer of said second plurality is interposed between two layers of said first plurality,
      each of said layers of said first and second pluralities having a thickness between 1.48 micrometers and 5 micrometers with a dimensional tolerance of ± 0.1 micrometers,
      said layers of said first and second pluralities being present in said coating in a total number between thirty-six and forty-one,
      said ultraviolet radiation filter is so arranged as to intercept all the ultraviolet radiations emitted by said emitting means at said coating, so as to filter said ultraviolet radiations.

Tests conducted by the Applicant show that the filter of the invention has a transmittance above 4% against ultraviolet radiations having a wavelength between 210 nanometers and 225 nanometers. The transmittance of the filter is advantageously high, and more precisely higher than 25%, against ultraviolet radiations having a wavelength of 222 nanometers. The transmittance of the filter is less than 4% against ultraviolet radiations having a wavelength between 230 nanometers and 240 nanometers, and is less than 3% against ultraviolet radiations having a wavelength between 245 nanometers and 340 nanometers. The average transmittance of the filter against ultraviolet radiations having a wavelength between 230 nanometers and 340 nanometers (considered harmful to humans) is advantageously less than 1%.

By applying the filter of the invention to a lamp irradiating UV-C radiations (so as to filter the radiations emitted by said lamp), it is advantageously possible to obtain a germicidal device emitting UV-C radiations the wavelength of which is in a range around 222 nanometers.

Other innovative features of the present invention are disclosed in the following description and mentioned in the dependent claims.

According to an aspect of the invention, said substrate further comprises (overall for no more than 0.1% by weight):
- aluminum in an amount of at least 0.01 ppm (i.e., "parts per million");
- calcium in an amount of at least 0.015 ppm;
- chromium in an amount of at least 0.001 ppm;
- copper in an amount of at least 0.03 ppm;
- iron in an amount of at least 0.05 ppm;
- potassium in an amount of at least 0.01 ppm;
- lithium in an amount of at least 0.001 ppm;
- magnesium in an amount of at least 0.05 ppm;
- sodium in an amount of at least 0.01 ppm;
- titanium in an amount of at least 0.005 ppm.

The present invention further relates to a method for manufacturing the aforesaid germicidal device, said method comprising the steps of:
- providing ultraviolet radiation emitting means having a wavelength in the UV-C band,
- providing ultraviolet radiation filter,
- connecting the ultraviolet filter to said ultraviolet radiation emitting means, wherein providing the ultraviolet radiation filter comprises:
   a) inserting said substrate into the deposition chamber of a physical vapor deposition system with electron gun (or cathode rays), also known as "Electron Beam Physical Vapor Deposition" or "EBPVD",
      the pressure in said chamber being no higher than 2 x 10⁻⁵ millibar;
   b) heating a tungsten filament housed in said deposition chamber so as to generate an electron beam;
   c) accelerating said electron beam with a voltage between 3 kilovolts and 40 kilovolts;
   d) directing said electron beam, by means of a magnetic field, towards a first source material housed in said deposition chamber, so as to impact said electron beam against said first source material,
      the impact of said electron beam against said first source material causing the generation of vapor of said first source material (due to a conversion of the kinetic energy of the electrons into thermal energy),
      said vapor of said first source material depositing on said first face of said substrate and condensing so as to form said first layer;
   e) directing said electron beam, by means of a magnetic field, towards a second source material housed in said deposition chamber, so as to impact said electron beam against said second source material,
      the impact of said electron beam against said second source material causing the generation of vapor of said second source material,
      said vapor of said second source material depositing on said first layer and condensing so as to form a second layer of said second or first plurality,
      one of said materials from said first and second source materials being composed of 100% silicon dioxide, the other of said materials from said first and second source materials being composed of 100% hafnium dioxide;
   f) directing said electron beam, by means of a magnetic field, towards said first source material so as to impact said electron beam against said first source material,
      the impact of said electron beam against said first source material causing the generation of vapor of said first source material,
      said vapor of said first source material depositing on said second layer and condensing so as to form a third layer of said first or second plurality;
   g) if said last layer has not been deposited, returning to step e)
      and
      if, returning to step e), said last layer is deposited in step e), skipping step f), so as to obtain said plate.

According to an aspect of the method invention, in step c), said electron beam is accelerated with a voltage between 20 kilovolts and 25 kilovolts. Advantageously, according to this aspect of the invention, at least 85% of the kinetic energy of the electron beam is converted into thermal energy. According to another aspect of the method invention, after step g), said method comprises the following step:
h) subjecting said plate to a surface finishing and/or polishing process.

### Brief description of the drawings

Further objects and advantages of the present invention will become apparent from the following detailed description of exemplary embodiments thereof and from the accompanying drawings, merely given by way of non-limiting explanation, in which:
- **Figure 1** shows, in a diagrammatic straight cross section, a filter according to the present invention;
- **Figure 2** also shows, in a diagrammatic view, a device of the invention including the filter in figure 1.

### Detailed description of preferred embodiments of the invention

Hereinafter in the present description, a figure may also be shown with reference to elements not expressly indicated in that figure but indicated on other figures. The scale and proportions of the various elements depicted do not necessarily correspond to the real values.

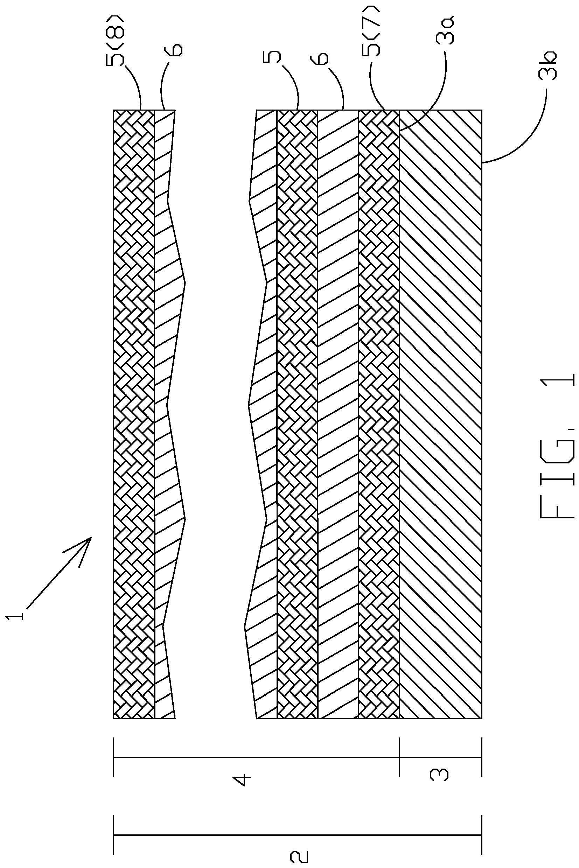

**Figure 1** shows an ultraviolet radiation filter 1 which is substantially opaque against ultraviolet radiations having a wavelength between 230 nanometers and 340 nanometers, and having high transmittance against UV-C radiations the wavelength of which is in a range around 222 nanometers. The filter 1 comprises a plate 2 including a substrate 3 which is permeable at least to ultraviolet radiations having a wavelength in the UV-C band and composed of silicon dioxide at least 99.9% by weight. As for the remaining 0.1% by weight, the substrate 3 preferably comprises:
- aluminum in an amount of at least 0.01 ppm;
- calcium in an amount of at least 0.015 ppm;
- chromium in an amount of at least 0.001 ppm;
- copper in an amount of at least 0.03 ppm;
- iron in an amount of at least 0.05 ppm;
- potassium in an amount of at least 0.01 ppm;
- lithium in an amount of at least 0.001 ppm;
- magnesium in an amount of at least 0.05 ppm;
- sodium in an amount of at least 0.01 ppm;
- titanium in an amount of at least 0.005 ppm.

The substrate 3 comprises a first face 3a and a second face 3b opposite to the face 3a and preferably parallel to the latter. The substrate 3 has a thickness, corresponding to the mutual distance of the faces 3a and 3b, between 1 millimeter and 2 millimeters with a dimensional tolerance of ± 0.1 millimeters.

The substrate 3, at the face 3a, is covered with a coating 4 comprising a first plurality of layers 5, each of which composed of 100% silicon dioxide, and a second plurality of layers 6, each of which composed of 100% hafnium dioxide. As can be seen in figure 1, the layers 5 are alternated with the layers 6 away from the substrate 3 so that, with the exception of the innermost layer 7 and the outermost layer 8 of the coating 4 (i.e., with the exception of a first layer 7 of said first or second plurality covering the face 3a of the substrate 3 and with the exception of a last layer 8 of said first or second plurality further away from the substrate 3 than the other layers 5 and 6), each layer 5 is interposed between two layers 6 and each layer 6 is interposed between two layers 5. Each of the layers 5 and 6 has a thickness between 1.48 micrometers and 5 micrometers with a dimensional tolerance of ± 0.1 micrometers. The layers 5 and 6 are present in the coating 4 in a total number between thirty-six and forty-one.

In figure 1, the layer 7 is a layer belonging to the first plurality, i.e., one of the layers 5. This is shown merely by way of example. The alternating series of layers 5 and 6 in the coating 4 could thus start, from the face 3a of the substrate 3, with a layer belonging to the second plurality, i.e., with one of the layers 6.

Similarly, in figure 1, the layer 8 is a layer belonging to the first plurality, i.e., one of the layers 5. This is shown merely by way of example. The alternating series of layers 5 and 6 in the coating 4 could thus end with a layer belonging to the second plurality, i.e., with one of the layers 6.

The manufacturing of a substrate (such as substrate 3) composed of 99.9% silicon dioxide by weight is widely known. Therefore, no further details will be provided.

The deposition of the coating 4 on the substrate 3 is preferably feasible by resorting to the physical deposition through electron gun (or cathode rays), also known as "Electron Beam Physical Vapor Deposition" or "EBPVD". More precisely, in order to manufacture the filter 1, it is necessary to insert the substrate 3 into the deposition chamber of an EBPVD system at a pressure not exceeding 2 x 10⁻⁵ millibar. A tungsten filament housed in said deposition chamber is then heated so as to generate an electron beam. The latter is accelerated with a voltage between 3 kilovolts and 40 kilovolts and preferably between 20 kilovolts and 25 kilovolts. The electron beam, by means of a magnetic field, is directed towards a first source material housed in the aforesaid deposition chamber, so as to impact the electron beam against said first source material. The impact of the electron beam against the first source material causes the generation of vapor of said first source material due to a conversion of the kinetic energy of the electrons into thermal energy. The vapor of the first source material is then deposited on the face 3a of the substrate 3 and condenses so as to form the layer 7. The electron beam, again by means of a magnetic field, is then directed towards a second source material which is also housed in the deposition chamber, so as to impact the electron beam against said second source material. Similarly to the first source material, the impact of the electron beam against the second source material causes the generation of vapor of said second source material. The latter is deposited on the layer 7 and condenses so as to form a second layer of the coating 4. One of the two materials from the first and second source materials is composed of 100% silicon dioxide, and the other of the two materials from the first and second source materials is composed of 100% hafnium dioxide. The electron beam, by means of a magnetic field, is directed again towards the first source material so as to impact the electron beam against said first source material. The impact of the electron beam against the first source material again causes the generation of vapor of the first source material. The latter is deposited on the aforesaid second layer and condenses so as to form a third layer of the coating 4. The aforementioned steps are repeated until the layer 8 is achieved, so as to obtain the plate 2. The latter can be subjected to a surface finishing and/or polishing process, thus obtaining the filter 1. In light of the above, in order to obtain the filter 1, a multilayer dichroic treatment is preferably performed on the substrate 3 by means of EBPVD.

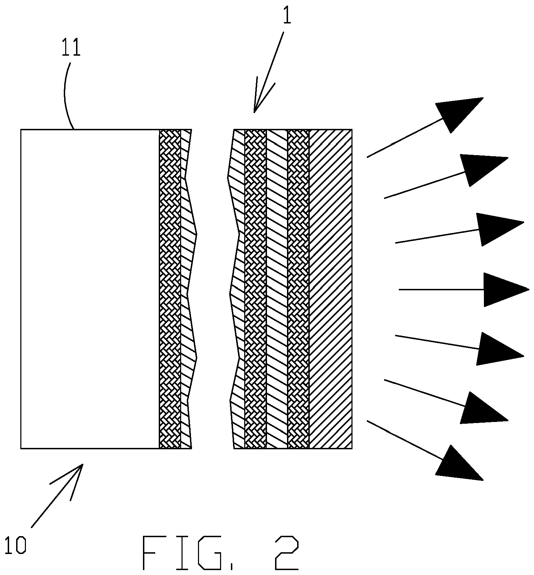

**Figure 2** also shows a germicidal device 10 of the invention, with ultraviolet radiation irradiation. The device 10 comprises a lamp 11, preferably of the deuterium discharge tube type, capable of emitting ultraviolet radiations having a wavelength in the UV-C band. The device 10 further includes the filter 1 connected to the lamp 11 so as to intercept all the ultraviolet radiations emitted by the latter at the coating 4 (i.e., so that all the ultraviolet radiations emitted by the lamp 11 strike the coating 4), so as to filter said ultraviolet radiations.

Based on the provided description of a preferred embodiment, it is apparent that some changes may be introduced by those skilled in the art without however departing from the scope of the invention as defined by the following claims.

## Claims

1. A germicidal device (10) with ultraviolet radiation irradiation,
said device (10) comprising:
• ultraviolet radiation emitting means (11) having a wavelength in the UV-C band,
• an ultraviolet radiation filter (1) connected to said emitting means (11),
wherein said ultraviolet radiation filter (1) comprises a plate (2) including:
• a substrate (3) which is permeable at least to ultraviolet radiations having a wavelength in the UV-C band and composed of silicon dioxide at least 99.9% by weight,
said substrate (3) comprising a first face (3a) and a second face (3b) opposite to said first face (3a),
said substrate (3) having a thickness, corresponding to the mutual distance of said first and second faces (3a, 3b), between 1 millimeter and 2 millimeters with a dimensional tolerance of ± 0.1 millimeters;
• a coating (4) comprising a first plurality of layers (5) each of which composed of 100% silicon dioxide, and a second plurality of layers (6) each of which composed of 100% hafnium dioxide,
said substrate (3) being covered with said coating (4) at said first face (3a),
in said coating (4), said layers (5) of said first plurality being alternated with said layers (6) of said second plurality away from said substrate (3) so that, with the exception of a first layer (7) of said first or second plurality covering said first face (3a) of said substrate (3) and with the exception of a last layer (8) of said first or second plurality further away from said substrate (3) than the other layers (5, 6) of said first and second pluralities, each layer (5) of said first plurality is interposed between two layers (6) of said second plurality and each layer (6) of said second plurality is interposed between two layers (5) of said first plurality,
each of said layers (5, 6) of said first and second pluralities having a thickness between 1.48 micrometers and 5 micrometers with a dimensional tolerance of ± 0.1 micrometers,
said filter (1) being **characterized in that** said layers (5, 6) of said first and second pluralities are present in said coating in a total number between thirty-six and forty-one,
wherein said ultraviolet radiation filter (1) is so arranged as to intercept all the ultraviolet radiations emitted by said emitting means (11) at said coating (4), so as to filter said ultraviolet radiations.

2. A germicidal device (10) according to claim 1, **characterized in that** said substrate (3) further comprises:
• aluminum in an amount of at least 0.01 ppm;
• calcium in an amount of at least 0.015 ppm;
• chromium in an amount of at least 0.001 ppm;
• copper in an amount of at least 0.03 ppm;
• iron in an amount of at least 0.05 ppm;
• potassium in an amount of at least 0.01 ppm;
• lithium in an amount of at least 0.001 ppm;
• magnesium in an amount of at least 0.05 ppm;
• sodium in an amount of at least 0.01 ppm;
• titanium in an amount of at least 0.005 ppm.

3. A germicidal device (10) according to claim 1 or 2, **characterized in that** said emitting means (11) comprise a deuterium discharge tube lamp.

4. A method for manufacturing a germicidal device (10) according to anyone of claims 1-3,
said method comprising the steps of:
• providing ultraviolet radiation emitting means (11) having a wavelength in the UV-C band,
• providing an ultraviolet radiation filter (1),
• connecting the ultraviolet radiation filter (1) to said ultraviolet radiation emitting means (11),
wherein providing the ultraviolet radiation filter (1) comprises:
a) inserting said substrate (3) into the deposition chamber of a physical vapor deposition system with electron gun,
the pressure in said deposition chamber not exceeding 2 x 10⁻⁵ millibar;
b) heating a tungsten filament housed in said deposition chamber so as to generate an electron beam;
c) accelerating said electron beam with a voltage between 3 kilovolts and 40 kilovolts;
d) directing said electron beam, by means of a magnetic field, towards a first source material housed in said deposition chamber, so as to impact said electron beam against said first source material,
the impact of said electron beam against said first source material causing the generation of vapor of said first source material,
said vapor of said first source material depositing on said first face (3a) of said substrate (3) and condensing so as to form said first layer (7);
e) directing said electron beam, by means of a magnetic field, towards a second source material housed in said deposition chamber, so as to impact said electron beam against said second source material,
the impact of said electron beam against said second source material causing the generation of vapor of said second source material,
said vapor of said second source material depositing on said first layer (7) and condensing so as to form a second layer (5, 6) of said second or first plurality,
one of said materials from said first and second source materials being composed of 100% silicon dioxide, the other of said materials from said first and second source materials being composed of 100% hafnium dioxide;
f) directing said electron beam, by means of a magnetic field, towards said first source material so as to impact said electron beam against said first source material,
the impact of said electron beam against said first source material causing the generation of vapor of said first source material,
said vapor of said first source material depositing on said second layer (5, 6) and condensing so as to form a third layer (5, 6) of said first or second plurality;
g) if said last layer (8) has not been deposited, returning to step e)
and
if, returning to step e), said last layer is deposited in step e), skipping step f), so as to obtain said plate (2),
said method being **characterized in that** said layers (5, 6) of said first and second pluralities are present in said coating in a total number between thirty-six and forty-one.

5. A method according to claim 4, **characterized in that**, in step c), said electron beam is accelerated with a voltage between 20 kilovolts and 25 kilovolts.

6. A method according to claim 4 or 5, **characterized in that** it comprises, after step g), the following step:
h) subjecting said plate (2) to a surface finishing and/or polishing process.

## Patentansprüche

1. Keimtötende Vorrichtung (10) mit Bestrahlung durch ultraviolette Strahlung, wobei die Vorrichtung (10) Folgendes umfasst:
• ultraviolette Strahlung emittierende Mittel (11) mit einer Wellenlänge im UV-C-Band,
• einen Filter für ultraviolette Strahlung (1), der mit den emittierenden Mitteln (11) verbunden ist,
wobei der Filter für ultraviolette Strahlung (1) eine Platte (2) umfasst, die Folgendes einschließt:
• ein Substrat (3), das zumindest für ultraviolette Strahlungen mit einer Wellenlänge im UV-C-Band durchlässig ist und zu mindestens 99,9 Gew.- % aus Siliziumdioxid besteht,
wobei das Substrat (3) eine erste Fläche (3a) und eine zweite Fläche (3b) gegenüber der ersten Fläche (3a) umfasst,
wobei das Substrat (3) eine Dicke aufweist, die dem gegenseitigen Abstand der ersten und zweiten Fläche (3a, 3b) zwischen 1 Millimeter und 2 Millimeter mit einer Maßtoleranz von ± 0,1 Millimeter entspricht;
• eine Beschichtung (4), umfassend eine erste Vielzahl von Schichten (5), die jeweils aus 100 % Siliziumdioxid bestehen, und eine zweite Vielzahl von Schichten (6), die jeweils aus 100 % Hafniumdioxid bestehen,
wobei das Substrat (3) an der ersten Fläche (3a) mit der Beschichtung (4) bedeckt ist,
wobei in der Beschichtung (4), die Schichten (5) der ersten Vielzahl mit den Schichten (6) der zweiten Vielzahl von dem Substrat (3) wegführend abwechseln, so dass mit Ausnahme einer ersten Schicht (7) der ersten oder zweiten Vielzahl, die die erste Fläche (3a) des Substrats (3) bedeckt, und mit Ausnahme einer letzten Schicht (8) der ersten oder zweiten Vielzahl, die weiter von dem Substrat (3) wegführend entfernt ist als die anderen Schichten (5, 6) der ersten und zweiten Vielzahl, eine jede Schicht (5) der ersten Vielzahl zwischen zwei Schichten (6) der zweiten Vielzahl angeordnet ist und eine jede Schicht (6) der zweiten Vielzahl zwischen zwei Schichten (5) der ersten Vielzahl angeordnet ist,
eine jede der Schichten (5, 6) der ersten und zweiten Vielzahl eine Dicke zwischen 1,48 Mikrometer und 5 Mikrometer mit einer Maßtoleranz von ± 0,1 Mikrometer aufweist,
wobei der Filter (1) **dadurch gekennzeichnet ist, dass** die Schichten (5, 6) der ersten und zweiten Vielzahl in der Beschichtung in einer Gesamtzahl zwischen sechsunddreißig und einundvierzig vorhanden sind,
wobei der Filter für ultraviolette Strahlung (1) so angeordnet ist, dass er alle von den emittierenden Mitteln (11) an der Beschichtung (4) emittierten ultravioletten Strahlungen abfängt, um die ultravioletten Strahlungen zu filtern.

2. Keimtötende Vorrichtung (10) nach Anspruch 1, **dadurch gekennzeichnet, dass** das Substrat (3) ferner Folgendes umfasst:
• Aluminium in einer Menge von mindestens 0,01 ppm;
• Calcium in einer Menge von mindestens 0,015 ppm;
• Chrom in einer Menge von mindestens 0,001 ppm;
• Kupfer in einer Menge von mindestens 0,03 ppm;
• Eisen in einer Menge von mindestens 0,05 ppm;
• Kalium in einer Menge von mindestens 0,01 ppm;
• Lithium in einer Menge von mindestens 0,001 ppm;
• Magnesium in einer Menge von mindestens 0,05 ppm;
• Natrium in einer Menge von mindestens 0,01 ppm;
• Titan in einer Menge von mindestens 0,005 ppm.

3. Keimtötende Vorrichtung (10) nach Anspruch 1 oder 2, **dadurch gekennzeichnet, dass** die emittierenden Mittel (11) eine Deuterium-Entladungsröhrenlampe umfassen.

4. Verfahren zur Herstellung einer keimtötenden Vorrichtung (10) nach einem der Ansprüche 1-3,
wobei das Verfahren die folgenden Schritte umfasst:
• Bereitstellen von ultraviolette Strahlung emittierenden Mitteln (11) mit einer Wellenlänge im UV-C-Band,
• Bereitstellen eines Filters für ultraviolette Strahlung (1),
• Verbinden des Filters für ultraviolette Strahlung (1) mit den ultraviolette Strahlung emittierenden Mitteln (11),
wobei das Bereitstellen des Filters für ultraviolette Strahlung (1) Folgendes umfasst:
a) Einbringen des Substrats (3) in die Abscheidekammer einer physikalischen Dampfabscheideanlage mit Elektronenkanone,
wobei der Druck in der Abscheidekammer 2 x 10⁻⁵ Millibar nicht überschreitet;
b) Erhitzen eines Wolframfadens, der in der Abscheidekammer untergebracht ist, um einen Elektronenstrahl zu erzeugen;
c) Beschleunigen des Elektronenstrahls mit einer Spannung zwischen 3 Kilovolt und 40 Kilovolt;
d) Richten des Elektronenstrahls mittels eines Magnetfelds auf ein erstes Quellenmaterial, das in der Abscheidekammer untergebracht ist, sodass der Elektronenstrahl gegen das erste Quellenmaterial stößt, wobei der Stoß des Elektronenstrahls gegen das erste Quellenmaterial die Erzeugung von Dampf des ersten Quellenmaterials verursacht,
wobei sich der Dampf des ersten Quellenmaterials auf der ersten Fläche (3a) des Substrats (3) ablagert und kondensiert, um die erste Schicht (7) zu bilden;
e) Richten des Elektronenstrahls mittels eines Magnetfelds auf ein zweites Quellenmaterial, das in der Abscheidekammer untergebracht ist, sodass der Elektronenstrahl gegen das zweite Quellenmaterial stößt, wobei der Stoß des Elektronenstrahls gegen das zweite Quellenmaterial die Erzeugung von Dampf des zweiten Quellenmaterials verursacht,
wobei sich der Dampf des zweiten Quellenmaterials auf der ersten Schicht (7) ablagert und kondensiert, um eine zweite Schicht (5, 6) der zweiten oder ersten Vielzahl zu bilden,
wobei eines der Materialien aus dem ersten und zweiten Quellenmaterial aus 100 % Siliziumdioxid besteht, das andere der Materialien aus dem ersten und zweiten Quellenmaterial aus 100 % Hafniumdioxid besteht;
f) Richten des Elektronenstrahls mittels eines Magnetfelds auf das erste Quellenmaterial, sodass der Elektronenstrahl gegen das erste Quellenmaterial stößt, wobei der Stoß des Elektronenstrahls gegen das erste Quellenmaterial die Erzeugung von Dampf des ersten Quellenmaterials verursacht,
wobei sich der Dampf des ersten Quellenmaterials auf der zweiten Schicht (5, 6) ablagert und kondensiert, um eine dritte Schicht (5, 6) der ersten oder zweiten Vielzahl zu bilden;
g) wenn die letzte Schicht (8) nicht abgeschieden wurde, Rückkehren zu Schritt e)
und
wenn, nach dem Rückkehr zu Schritt e), die letzte Schicht in Schritt e) abgeschieden wird, Überspringen des Schrittes f), um die Platte (2) zu erhalten,
wobei das Verfahren **dadurch gekennzeichnet ist, dass** die Schichten (5, 6) der ersten und zweiten Vielzahl in der Beschichtung in einer Gesamtzahl zwischen sechsunddreißig und einundvierzig vorhanden sind.

5. Verfahren nach Anspruch 4, **dadurch gekennzeichnet, dass** in Schritt c) der Elektronenstrahl mit einer Spannung zwischen 20 Kilovolt und 25 Kilovolt beschleunigt wird.

6. Verfahren nach Anspruch 4 oder 5, **dadurch gekennzeichnet, dass** es nach Schritt g) den folgenden Schritt umfasst:
h) Unterziehen der Platte (2) einem Oberflächenveredelungs- und/oder Polierprozess.

## Revendications

1. Dispositif germicide (10) à irradiation par rayonnement ultraviolet, ledit dispositif (10) comprenant :
• des moyens d'émission (11) de rayonnement ultraviolet ayant une longueur d'onde dans la bande UV-C,
• un filtre (1) de rayonnement ultraviolet relié auxdits moyens d'émission (11),
dans lequel ledit filtre (1) de rayonnement ultraviolet comprend une plaque (2) incluant :
• un substrat (3) étant perméable au moins aux rayonnements ultraviolets ayant une longueur d'onde dans la bande UV-C et composé de dioxyde de silicium à au moins 99,9 % en poids,
ledit substrat (3) comprenant une première face (3a) et une seconde face (3b) opposée à la première face (3a), ledit substrat (3) ayant une épaisseur, correspondant à la distance mutuelle desdites première et seconde faces (3a, 3b), comprise entre 1 millimètre et 2 millimètres avec une tolérance dimensionnelle de ± 0,1 millimètres ;
• un revêtement (4), comprenant une première pluralité de couches (5) composées chacune de dioxyde de silicium à 100 %, et une seconde pluralité de couches (6) composées chacune de dioxyde d'hafnium à 100 %,
ledit substrat (3) étant recouvert dudit revêtement (4) en correspondance de ladite première face (3a),
dans ledit revêtement (4), lesdites couches (5) de ladite première pluralité étant alternées avec lesdites couches (6) de ladite seconde pluralité éloignées dudit substrat (3) de sorte que, à l'exception d'une première couche (7) de ladite première ou seconde pluralité recouvrant ladite première face (3a) dudit substrat (3) et à l'exception d'une dernière couche (8) de ladite première ou seconde pluralité plus éloignée dudit substrat (3) que les autres couches (5, 6) desdites première et seconde pluralités, chaque couche (5) de ladite première pluralité est interposée entre deux couches (6) de ladite seconde pluralité et chaque couche (6) de ladite seconde pluralité est interposée entre deux couches (5) de ladite première pluralité,
chacune desdites couches (5, 6) desdites première et seconde pluralités ayant une épaisseur comprise entre 1,48 micromètres et 5 micromètres avec une tolérance dimensionnelle de ± 0,1 micromètres,
ledit filtre (1) étant **caractérisé en ce que** lesdites couches (5, 6) desdites première et seconde pluralités sont présentes dans ledit revêtement en un nombre total compris entre trente-six et quarante et un,
dans lequel ledit filtre (1) de rayonnement ultraviolet est disposé de manière à intercepter tous les rayonnements ultraviolets émis par lesdits moyens d'émission (11) en correspondance dudit revêtement (4), de manière à filtrer lesdits rayonnements ultraviolets.

2. Dispositif germicide (10) selon la revendication 1, **caractérisé en ce que** ledit substrat (3) comprend en outre :
• de l'aluminium dans une quantité d'au moins 0,01 ppm ;
• du calcium dans une quantité d'au moins 0,015 ppm ;
• du chrome dans une quantité d'au moins 0,001 ppm ;
• du cuivre dans une quantité d'au moins 0,03 ppm ;
• du fer dans une quantité d'au moins 0,05 ppm ;
• du potassium dans une quantité d'au moins 0,01 ppm ;
• du lithium dans une quantité d'au moins 0,001 ppm ;
• du magnésium dans une quantité d'au moins 0,05 ppm ;
• du sodium dans une quantité d'au moins 0,01 ppm ;
• du titane dans une quantité d'au moins 0,005 ppm.

3. Dispositif germicide (10) selon la revendication 1 ou 2, **caractérisé en ce que** lesdits moyens d'émission (11) comprennent une lampe à tube de décharge au deutérium.

4. Procédé de fabrication d'un dispositif germicide (10) selon l'une quelconque des revendications 1-3,
ledit procédé comprenant les étapes de :
• fournir des moyens d'émission (11) de rayonnement ultraviolet ayant une longueur d'onde dans la bande UV-C,
• fournir un filtre (1) de rayonnement ultraviolet,
• relier le filtre (1) de rayonnement ultraviolet auxdits moyens d'émission (11) de rayonnement ultraviolet,
dans lequel la fourniture du filtre (1) de rayonnement ultraviolet comprend :
a) insérer ledit substrat (3) dans la chambre de dépôt d'un système de dépôt physique en phase vapeur avec canon à électrons,
la pression dans ladite chambre de dépôt ne dépassant pas 2 x 10⁻⁵ millibar ;
b) chauffer un filament de tungstène logé dans ladite chambre de dépôt de manière à générer un faisceau d'électrons ;
c) accélérer ledit faisceau d'électrons avec une tension comprise entre 3 kilovolts et 40 kilovolts ;
d) diriger ledit faisceau d'électrons, au moyen d'un champ magnétique, vers un premier matériau source logé dans ladite chambre de dépôt, de manière à provoquer l'impact dudit faisceau d'électrons contre ledit premier matériau source,
l'impact dudit faisceau d'électrons contre ledit premier matériau source provoquant la génération de vapeur dudit premier matériau source,
ladite vapeur dudit premier matériau source se déposant sur ladite première face (3a) dudit substrat (3) et se condensant de manière à former ladite première couche (7) ;
e) diriger ledit faisceau d'électrons, au moyen d'un champ magnétique, vers un second matériau source logé dans ladite chambre de dépôt, de manière à provoquer l'impact dudit faisceau d'électrons contre ledit second matériau source,
l'impact dudit faisceau d'électrons contre ledit second matériau source provoquant la génération de vapeur dudit second matériau source,
ladite vapeur dudit second matériau source se déposant sur ladite première couche (7) et se condensant de manière à former une seconde couche (5, 6) de ladite seconde ou première pluralité,
l'un desdits matériaux desdits premier et second matériaux sources étant composé de dioxyde de silicium à 100 %, l'autre desdits matériaux desdits premier et second matériaux sources étant composé de dioxyde d'hafnium à 100 % ;
f) diriger ledit faisceau d'électrons, au moyen d'un champ magnétique, vers ledit premier matériau source de manière à provoquer l'impact dudit faisceau d'électrons contre ledit premier matériau source,
l'impact dudit faisceau d'électrons contre ledit premier matériau source provoquant la génération de vapeur dudit premier matériau source,
ladite vapeur dudit premier matériau source se déposant sur ladite seconde couche (5, 6) et se condensant de manière à former une troisième couche (5, 6) de ladite première ou seconde pluralité ;
g) si ladite dernière couche (8) n'a pas été déposée, retourner à l'étape e)
et
si, en retournant à l'étape e), ladite dernière couche est déposée à l'étape e), sauter l'étape f), afin d'obtenir ladite plaque (2),
ledit procédé étant **caractérisé en ce que** lesdites couches (5, 6) desdites première et seconde pluralités sont présentes dans ledit revêtement en un nombre total compris entre trente-six et quarante et un.

5. Procédé selon la revendication 4, **caractérisé en ce que**, à l'étape c), ledit faisceau d'électrons est accéléré avec une tension comprise entre 20 kilovolts et 25 kilovolts.

6. Procédé selon la revendication 4 ou 5, **caractérisé en ce qu'**il comprend, après l'étape g), l'étape suivante :
h) soumettre ladite plaque (2) à un processus de finition de surface et/ou de polissage.
